# EUROPÄISCHE PATENTSCHRIFT

(11) **EP 2 151 345 B1**
(45) Veröffentlichungstag und Bekanntmachung des Hinweises auf die Patenterteilung: **02.01.2013**
(21) Anmeldenummer: 09165544.9
(22) Anmeldetag: 15.07.2009
(51) Int. Cl.: B60K 11/02, F04D 29/52

(54) **Lüfter und Verfahren zur Montage eines Lüfters**
Fan and method for mounting a fan
Ventilateur et procédé de montage dudit ventilateur

(30) Priorität: 07.08.2008 DE 102008041078
(43) Veröffentlichungstag der Anmeldung: 10.02.2010
(73) Patentinhaber: Robert Bosch GmbH, 70442 Stuttgart (DE)
(72) Erfinder: Casagrande, Julien, 77855, Achern-Sasbachried (DE); Reith, Mario, 77815, Buehl (DE); Liedel, Markus, 91257, Pegnitz (DE); Linnenbrock, Klaus, 77815, Buehl (DE)

(56) Entgegenhaltungen:
- WO-A1-2008/074307
- DE-A1- 19 857 926
- JP-A- 59 046 316

## Beschreibung

Die Erfindung betrifft einen Lüfter gemäß dem Oberbegriff des Anspruchs 1, sowie ein Verfahren zur Montage eines Lüfters gemäß dem Oberbegriff des Anspruchs 10.

Bei Lüfteranordnungen der eingangs genannten Art für einen aufrecht stehenden Axiallüfter eines Kühlers eines Kraftfahrzeugs wird der Ringspalt zwischen der Einhüllenden des Lüfterrades und dem benachbarten Teil des Lüftergehäuses einer Lüfterzarge üblicherweise so eingestellt, dass er um den gesamten Umfang des Lüfterrades herum dasselbe Spaltmaß besitzt. Da der Antriebsmotor und das Lüfterrad gewöhnlich auf der Saugseite weiter als auf der Druckseite über einen zur Befestigung des Antriebsmotors dienenden Befestigungs- oder Motorring einer das Lüftergehäuse umfassenden Lüfterzarge überstehen, wirkt nach der Montage des Lüfters infolge der Schwerkraft des Antriebsmotors und des Lüfterrades ein Drehmoment auf die Lüfterzarge ein. Dieses Drehmoment führt mit der Zeit dazu, dass sich die zumeist aus einem Kunststoffmaterial hergestellte Lüfterzarge durch Kriechen des Kunststoffmaterials verformt, was wiederum zu einem Verkippen des Antriebsmotors und des Lüfterrades führt. Je weicher das Kunststoffmaterial, je geringer die Steifigkeit der Lüfterzarge und je höher die Umgebungstemperatur im Betrieb des Kraftfahrzeugs ist, umso ausgeprägter ist diese Verformung, die mit zunehmender Betriebslebensdauer zu einer immer stärkeren Schräglage des Lüfterrades führt.

Um einen Kontakt zwischen dem rotierenden Lüfterrad und dem Lüftergehäuse zu verhindern, wird daher der Ringspalt im Neuzustand des Lüfters so groß gemacht, dass das Spaltmaß und insbesondere ein durch die Verkippung stärker betroffenes axiales Spaltmaß auch am Ende der prognostizierten Betriebslebensdauer des Lüfters noch ausreichend Sicherheit gegen einen ungewollten Kontakt zwischen dem Lüfterrad und dem Lüftergehäuse bietet. Da bei einem relativ großen Spaltmaß jedoch auch mehr Luft von der Druckseite zur Saugseite des Lüfters zurückströmt, nimmt der Luftleistungswirkungsgrad des Lüfters mit zunehmender Spaltgröße in unerwünschter Weise ab.

Aus der DE-A-19857926 sind bereits ein Lüfter und ein Verfahren der eingangs genannten Art bekannt, wo das Spaltmaß eines Ringspalts zwischen dem Lüftergehäuse und dem Lüfterrad in Umfangsrichtung des Lüfterrades variiert und an einer Seite des Lüfters größer als an der gegenüberliegenden Seite ist.

Ausgehend hiervon liegt der Erfindung die Aufgabe zugrunde, eine Lüfteranordnung und ein Verfahren der eingangs genannten Art dahingehend zu verbessern, dass ohne die Gefahr eines Kontakts zwischen dem Lüfterrad und dem Lüftergehäuse eine Verringerung des Spaltmaßes möglich ist.

Diese Aufgabe wird erfindungsgemäß durch die Merkmale der Ansprüche 1 bzw. 10 gelöst.

Der Erfindung liegt der Gedanke zugrunde, dass unter den eingangs genannten Voraussetzungen das infolge der Schwerkraft des Antriebsmotors und des Lüfterrades auf die Lüfterzarge einwirkende Moment immer so ausgerichtet ist, dass es im Laufe der Betriebslebensdauer eine Verkleinerung des Ringspalts an der Unterseite des Lüfters zur Folge hat. Um diese einseitige, im Laufe der Betriebslebensdauer auftretende Verkleinerung des Ringspalts an der Unterseite des Lüfters zu kompensieren, wird daher vorgeschlagen, im Neuzustand des Lüfters das Spaltmaß an dessen Oberseite so klein wie möglich zu machen, während an der Unterseite des Lüfters ein größeres Spaltmaß vorgesehen wird, das ausreicht, um die Verkleinerung des Ringspalts an dieser Stelle infolge der während der Betriebslebensdauer des Lüfters auftretenden Verformung der Lüfterzarge vorzuhalten.

Um es zu ermöglichen, das Spaltmaß und insbesondere das axiale Spaltmaß ohne wesentliche konstruktive Änderungen am Lüfter nur an der Lüfterunterseite zu vergrößern, sieht die Erfindung vor, eine von einem rotationssymmetrischen Rand einer Luftaustritts- und/oder Lufteintrittsöffnung des Lüftergehäuses aufgespannte Gehäuseebene des Lüftergehäuses und die Rotationsebene des Lüfterrades in Bezug zueinander unter einem Neigungswinkel ungleich 0 Grad anzuordnen. Vorzugsweise ist der Neigungswinkel größer als 0,5 Grad.

Da auf diese Weise im Vergleich zu bekannten Lüfteranordnungen das mittlere Spaltmaß über den Umfang des Lüfterrades gesehen verkleinert werden kann, ist durch die erfindungsgemäße Maßnahme entweder eine Vergrößerung des Luftleistungswirkungsgrades des Lüfters oder alternativ die Verwendung kostengünstigerer weicherer Kunststoffmaterialen bzw. eine Konstruktion der Lüfterzarge mit geringerer Steifigkeit und/oder größeren Toleranzen möglich.

Als Einhüllende wird im Rahmen der vorliegenden Erfindung die Rotationsfläche bezeichnet, die den vom rotierenden Lüfterrad benötigten Raum begrenzt. Bei Mantellüftern, bei denen die Flügel des Lüfterrades an ihrem äußeren Umfang durch ein gewöhnlich als Mantel bezeichnetes umlaufendes Band verbunden sind, wird die Einhüllende im Bereich des Ringspalts in der Regel von einer Oberfläche des Mantels gebildet, während sie bei mantellosen Lüftern eine gekrümmte Rotationsfläche ist, die während der Rotation des Lüfterrades von einer Kante der Flügel überstrichen wird, die einem den Ringspalt begrenzenden Teil des Lüftergehäuses gegenüberliegt.

Da ein Verkippen eines aufrecht in der Lüfterzarge stehenden Lüfters mit einer horizontalen Drehachse dazu führt, dass ein axiales Spaltmaß des Ringspalts stärker als ein radiales Spaltmaß des Ringspalts verändert wird, sieht eine bevorzugte Ausgestaltung der Erfindung vor, dass zumindest das axiale Spaltmaß des Ringspalts an der Lüfterunterseite größer ist als an der Lüfteroberseite, wobei es bevorzugt mindestens das 1,2 bis 1,5-fache des axialen Spaltmaßes des Ringspalts an der Lüfteroberseite beträgt.

Die geneigte Anordnung der Gehäuseebene des Lüftergehäuses und der Rotationsebene des Lüfterrades kann vorteilhaft dadurch erreicht werden, dass eine zur Befestigung des Antriebsmotors an der Lüfterzarge dienende ebene Anlagefläche der Lüfterzarge nicht wie bei bekannten Lüfteranordnungen parallel zur gegenüberliegenden Anlagefläche des Antriebsmotors ausgerichtet ist, sondern unter einem kleinen Neigungswinkel ungleich 0 Grad. Dazu können beispielsweise mehrere, zum Anschrauben des Antriebsmotors am Motorring der Lüfterzarge dienende, im Winkelabstand voneinander am Motorring angeordnete Motoranschraubdome unterschiedlich weit über den Motorring überstehen.

Um denselben Zweck zu erreichen, können alternativ dazu jedoch auch auf der Motorseite vorgesehene, zum Anschrauben des Antriebsmotors dienende und über einen Umfang eines Motorgehäuses des Antriebsmotors überstehende Haltewinkel in Bezug zu einer Stirnfläche des Motorgehäuses axial versetzt werden.

Eine weitere vorteilhafte Alternative sieht vor, dass der den Spalt begrenzende Teil des Lüftergehäuses eine nicht-rotationssymmetrische Form besitzt, so dass er trotz einer mit der Längsmittelachse des Lüftergehäuses fluchtenden Drehachse des Lüfterrades an der Unterseite des Lüftergehäuses in einem größeren Abstand von der Einhüllenden des Lüfterrades angeordnet ist.

Um einer verformungsbedingten vertikalen Absenkung des Antriebsmotors und des Lüfterrades entgegenzuwirken, kann darüber hinaus zusätzlich vorgesehen sein, dass im Neuzustand des Lüfters ein radialer Abstand zwischen dem Lüfterrad und dem den Ringspalt an der Lüfteroberseite begrenzenden Teil des Lüftergehäuses kleiner ist als ein radialer Abstand zwischen dem Lüfterrad und dem den Ringspalt an der Lüfterunterseite begrenzenden Teil des Lüftergehäuses.

Um eine Kollision des Lüfterrades mit dem Kühler infolge des Verkippens des Lüfterrades zu vermeiden, kann die Lüfterebene unter einem der Kipprichtung des Lüfterrades entgegen gerichteten Neigungswinkel in Bezug zu einer vom Kühler aufgespannten Kühlerebene angeordnet werden.

Die Position des größeren Spaltmaßes hängt allgemein von der Einbaulage des Lüfters und von der Richtung des vom Antriebsmotor und vom Lüfterrad auf die Lüfterzarge ausgeübten Drehmoments ab. Dort, wo der Lüfter beispielsweise saugseitig weiter über den Motorring der Lüfterzarge übersteht und daher ein Drehmoment auf die Lüfterzarge einwirkt, das zu einem Verkippen des Lüfterrades nach oben führt, ist selbstverständlich im Neuzustand des Lüfters das Spaltmaß an der Oberseite des Lüfterrades größer als an dessen Unterseite.

### Kurze Beschreibung der Zeichnungen

Im Folgenden wird die Erfindung anhand einiger in der Zeichnung dargestellter Ausführungsbeispiele näher erläutert. Es zeigen:
Fig. 1 eine Querschnittsansicht einer Montageanordnung eines Axiallüfters gemäß dem Stand der Technik hinter einem Kühler eines Kraftfahrzeugs;
Fig. 2 eine vereinfachte schematische Querschnittsansicht der Montageanordnung aus Fig. 1 unmittelbar nach der Montage des Lüfters;
Fig. 3 eine vereinfachte schematische Querschnittsansicht der Montageanordnung aus Fig. 1 am Ende einer Betriebslebensdauer des Lüfters;
Fig. 4 eine vereinfachte schematische Querschnittsansicht einer erfindungsgemäßen Montageanordnung unmittelbar nach der Montage des Lüfters;
Fig. 5 eine vereinfachte schematische Seitenansicht von Teilen einer anderen erfindungsgemäßen Montageanordnung unmittelbar nach der Montage des Lüfters;
Fig. 6 eine vereinfachte schematische Querschnittsansicht einer noch anderen erfindungsgemäßen Montageanordnung unmittelbar nach der Montage des Lüfters;
Fig. 7a bis 7f vergrößerte Querschnittsansichten unterschiedlich geformter Ringspalte zwischen dem Lüftergehäuse und dem Lüfterrad des Lüfters.

### Ausführungsformen der Erfindung

Die in der Zeichnung dargestellten Montageanordnungen 2 für einen Axiallüfter 4 eines Kraftfahrzeugkühlers 6 umfassen jeweils ein drehbares, von einem Elektromotor 8 angetriebenes Lüfterrad 10, das zusammen mit dem Elektromotor 8 von einer in Fahrtrichtung F des Kraftfahrzeugs hinter dem Kühler 6 in einem Motorraum des Kraftfahrzeugs montierten Lüfterzarge 12 gehalten wird.

Das Lüfterrad 10 weist einen zwischen dem Elektromotor 8 und dem Kühler 8 angeordneten, an einer Antriebswelle 14 des Elektromotors 8 befestigten und topfförmig nach hinten umgebogenen Nabenteil 16, mehrere im Winkelabstand voneinander radial über den Nabenteil 16 überstehende aerodynamisch geformte Lüfterflügel 18 und einen die Lüfterflügel 18 an ihren radial äußeren Enden miteinander verbindenden Mantel 20 auf.

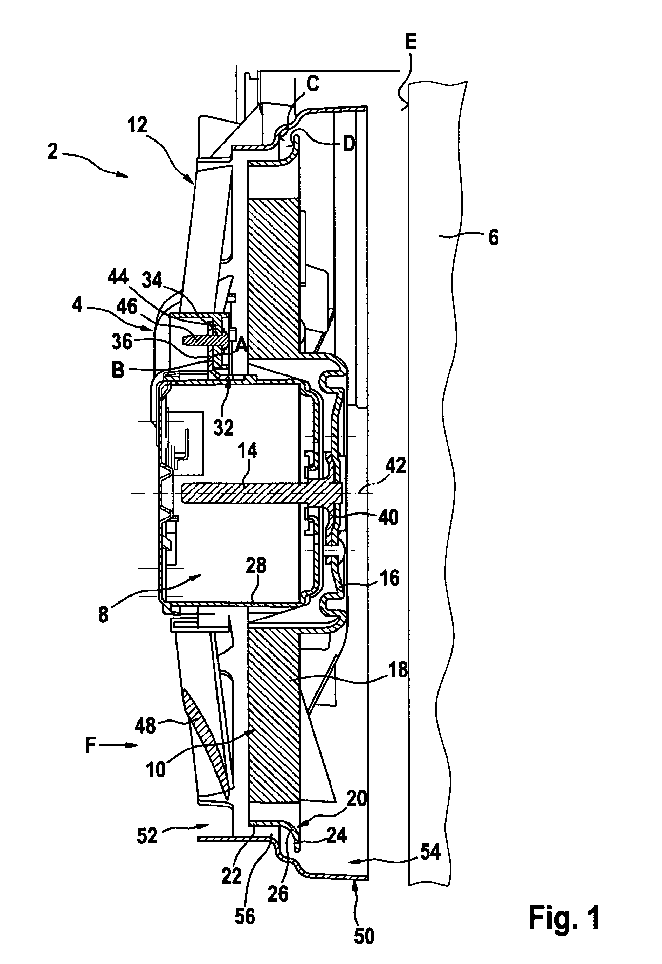

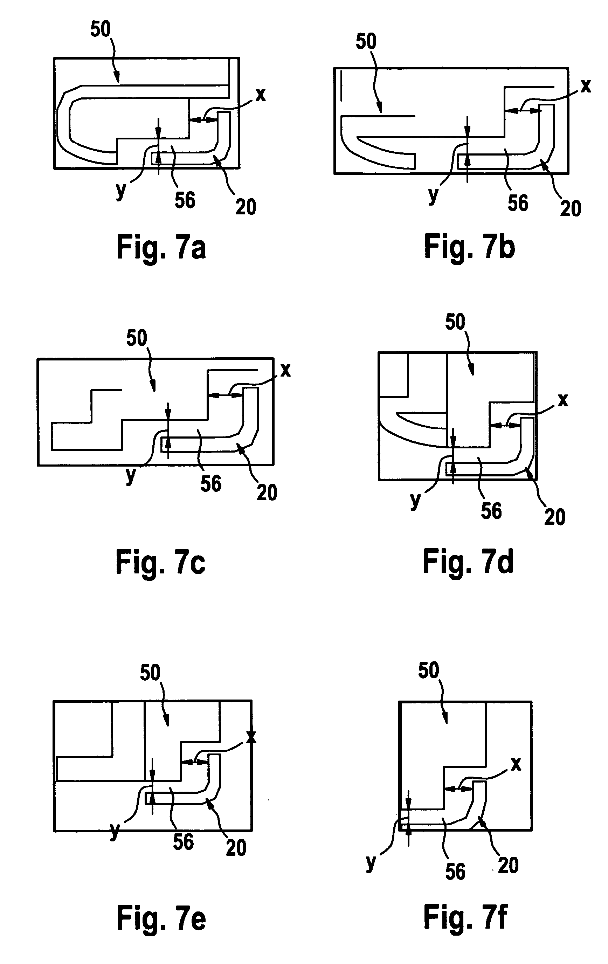

Wie am besten in Fig. 1 und in den Figuren 7a bis 7f dargestellt, umfasst der ringförmige Mantel 20 im Querschnitt einen lufteintrittsseitigen axialen Mantelabschnitt 22 und einen luftaustrittsseitigen radialen Mantelabschnitt 24, die durch einen gekrümmten Übergang 26 einstückig miteinander verbunden sind.

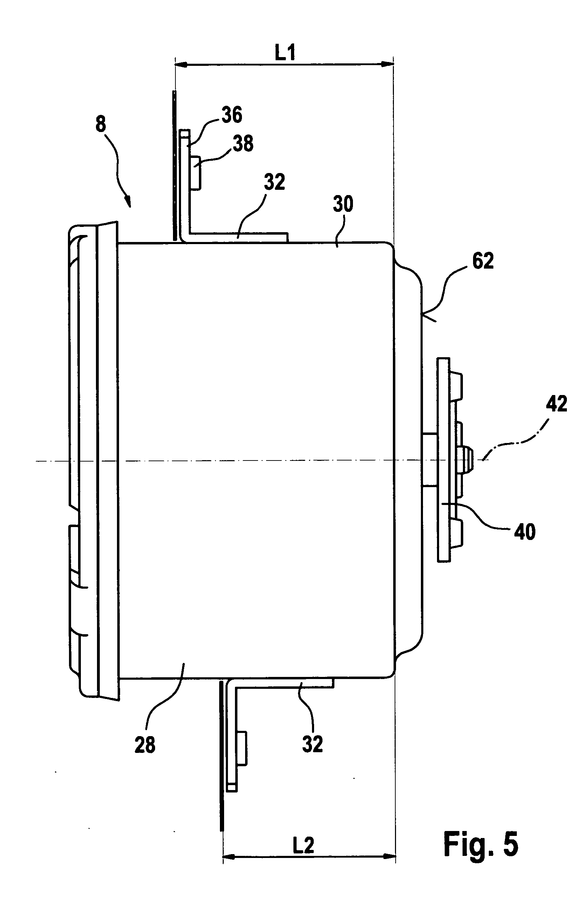

Wie am besten in Fig. 1 und 5 dargestellt, weist der Elektromotor 8 ein kompaktes zylindrisches Motorgehäuse 28 auf, an dessen Umfang 30 mehrere zur Befestigung des Elektromotors 8 an einem Motorring 34 (Fig. 1) der Lüfterzarge 12 dienende Haltewinkel 32 im Winkelabstand voneinander am Gehäuse 28 angeschweißt sind. Die Haltewinkel 32 weisen jeweils einen radial abstehenden ebenen Schenkel 36 auf, der mit einer Gewindebohrung 38 versehen ist. Die Antriebswelle 14 des Elektromotors 8 ist an ihrem dem Kühler 6 zugewandten Stirnende mit einem zur Befestigung des Nabenteils 16 des Lüfterrades 10 dienenden Schraubflansch 40 versehen.

Der zur Befestigung des Elektromotors 8 dienende Motorring 34 der Lüfterzarge 12 weist mehrere zur Drehachse 42 des Lüfterrades 10 parallele Schraubenbohrungen 44 auf, durch die bei der Montage des Elektromotors 8 am Motorring 34 Motorbefestigungsschrauben 46 in die Gewindebohrungen 38 der Haltewinkel 32 des Motorgehäuses 28 des Elektromotors 8 eingeschraubt werden, wie in Fig. 1 dargestellt.

Weiter umfasst die Lüfterzarge 12 mehrere stationäre, in Strömungsrichtung der geförderten Luft vor dem Lüfterrad 10 angeordnete Luftleitschaufeln 48 (Fig. 1), die dazu dienen, der Luft vor dem Erreichen des Lüfterrades 10 einen Drall zu verleihen.

Die Lüfterzarge 12 weist außerdem ein kurzes röhrenförmiges Lüftergehäuse 50 auf, das den Elektromotor 8 und das Lüfterrad 10 umgibt und sich von einer Lufteintrittsöffnung 52 an der vom Kühler 6 abgewandten Rückseite des Lüfters 4 bis zu einer erweiterten Luftaustrittsöffnung 54 an der dem Kühler 6 zugewandten Vorderseite des Lüfters 4 erstreckt. Das Lüftergehäuse 50, die Luftleitschaufeln 48 und der Motorring 34 sind einstückig durch Spritzgießen aus thermoplastischem Kunststoff hergestellt.

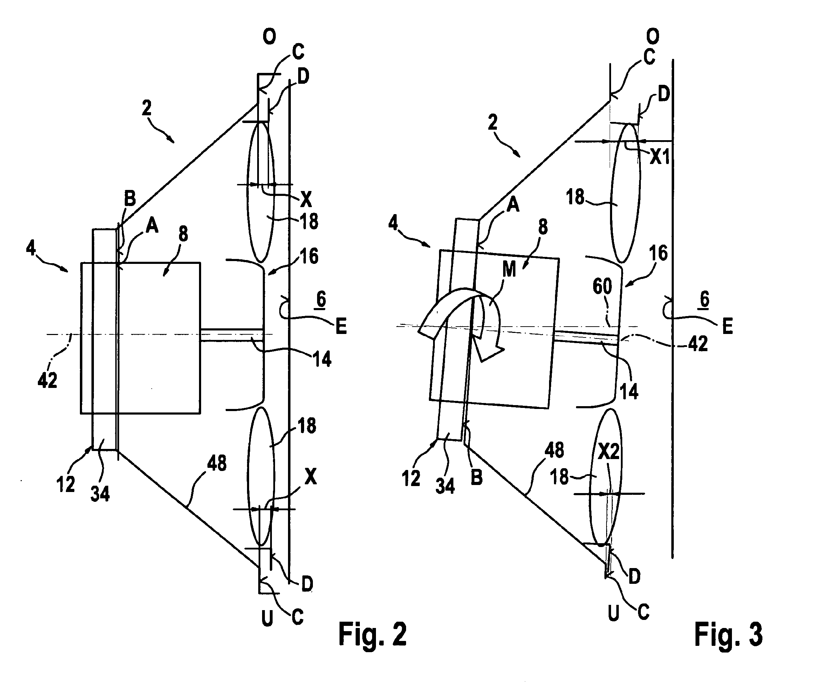

Das Lüftergehäuse 50 erweitert sich radial auswärts vom Mantel 20 des Lüfterrades 10 in zwei Stufen, so dass zwischen dem Mantel 20 und der Innenseite des Lüftergehäuses 50 ein schmaler Ringspalt 56 gebildet wird. Dieser Ringspalt 56 soll verhindern, dass das Lüfterrad 10 während seiner Drehung gegen das Lüftergehäuse 50 anschlägt, und soll möglichst kleine Querschnittsabmessungen besitzen, um sicherzustellen, dass im Betrieb des Lüfters 4 nur wenig Luft durch den Ringspalt 56 von dessen Druckseite zu dessen Saugseite zurückströmen und damit den Luftleistungswirkungsgrad des Lüfters 4 beeinträchtigen kann. Um den Strömungswiderstand im Ringspalt 56 zu erhöhen, wird die Luft dort mindestens zweimal umgelenkt. Die lichte Weite des Ringspalts 56 wird als Spaltmaß bezeichnet und ist dort am größten, wo sich eine radial ausgerichtete Innenseite des Lüftergehäuses 50 und eine radial ausgerichtete Oberfläche des Mantels 20 in einem als axiales Spaltmaß X bezeichneten Abstand gegenüberliegen, wie am besten in den Figuren 2 bis 5 und 7a bis 7f dargestellt. Wie am besten in den Figuren 7a bis 7f dargestellt, ist das radiale Spaltmaß Y des Spaltes 56 zwischen einer in axialer Richtung ausgerichteten Innenseite des Lüftergehäuses 50 und einer gegenüberliegenden axial ausgerichteten Oberfläche des Mantels 20 gewöhnlich kleiner als das axiale Spaltmaß X, weil das letztere über die Betriebslebensdauer des Lüfters 4 in der Regel stärkeren Veränderungen unterworfen ist, wie nachfolgend erläutert wird.

Bei bekannten Montageanordnungen von Lüftern, wie bei der in den Figuren 1 bis 3 dargestellten Montageanordnung 2, wird der Lüfter 4 üblicherweise so ausgeführt bzw. montiert, dass eine ebene Anlagefläche A der Haltewinkel 32 des Lüftermotors 8 am Motorring 34, eine gegenüberliegende ebene Anlagefläche B des Motorrings 34, eine den Spalt 56 begrenzenden radiale ebene Oberfläche C des Lüftergehäuses 50, eine gegenüberliegende, ebenfalls den Spalt 56 begrenzende ebene radiale Oberfläche D des Mantels 20 des Lüfterrades 10 und eine vom Kühler 6 aufgespannte Kühlerebene E sämtlich parallel zueinander ausgerichtet sind. Infolge dieser Ausrichtung sowie einer rotationssymmetrischen Anordnung des Lüfterrades 10 und des Lüftergehäuses 50 ist bei den bekannten Montageanordnungen das axiale Spaltmaß X und das radiale Spaltmaß Y des Spaltes 56 im Neuzustand des Lüfters 4, d.h. unmittelbar nach dessen Montage hinter dem Kühler 6, um den gesamten Umfang des Lüfterrades 10 herum identisch, wie am besten in Fig. 1 und 2 dargestellt.

Im Laufe der Betriebslebensdauer des Lüfters 4 verändert sich jedoch das Spaltmaß X und Y, da bei den dargestellten Lüfteranordnungen 2 der Elektromotor 8 und das Lüfterrad 10 druckseitig weiter als saugseitig über den Motorring 34 überstehen. Infolge der Gewichtskraft des Elektromotors 8 und des Lüfterrades 10 wirkt dadurch ein Drehmoment M (Fig. 3) auf die Lüfterzarge 12 ein, das mit der Zeit im Bereich des Motorrings 34 zu einer leichten Verformung der zumeist aus thermoplastischem Kunststoff hergestellten Lüfterzarge 12 durch Kriechen des Kunststoffs führt. Die Verformung ist umso größer, je weicher der zur Herstellung der Lüfterzarge 12 verwendete Kunststoff oder je weniger steif die Konstruktion der Lüfterzarge 12 ist. Wie in Fig. 3 schematisch dargestellt, führt die Verformung mit zunehmender Betriebslebensdauer des Lüfters 4 dazu, dass sich die Drehachse 42 des Lüfterrades 10 in Richtung des Kühlers 6 immer weiter nach unten neigt, wodurch an der Oberseite O des Lüftergehäuses 50 das axiale Spaltmaß X1 des Ringspalts 56 immer größer und an der Unterseite U des Lüftergehäuses 50 das axiale Spaltmaß X2 des Ringspalts 56 immer kleiner wird. Da diese Verformung nicht dazu führen darf, dass es über die prognostizierte Lebensdauer des Lüfters 4 zu einem Kontakt zwischen dem rotierenden Lüfterrad 10 und dem Lüftergehäuse 50 oder dem Kühler 6 kommt, wird bei bekannten Lüfteranordnungen gewöhnlich im Neuzustand des Lüfters 6 das Spaltmaß X und Y und insbesondere das durch die Verformung stärker betroffene axiale Spaltmaß X um den gesamten Umfang des Lüfterrades 10 herum um 50 % gegenüber dem im Neuzustand erforderlichen Spaltmaß vergrößert, so dass es trotz einer zu erwartenden Verkleinerung des Ringspalts 56 an der Unterseite U des Lüfters 4 über dessen Betriebslebensdauer nicht zu einem Kontakt zwischen dem rotierenden Lüfterrad 10 und dem Lüftergehäuse 50 kommt. Durch das relativ große Spaltmaß X sinkt jedoch der Luftleistungswirkungsgrad des Lüfters 4.

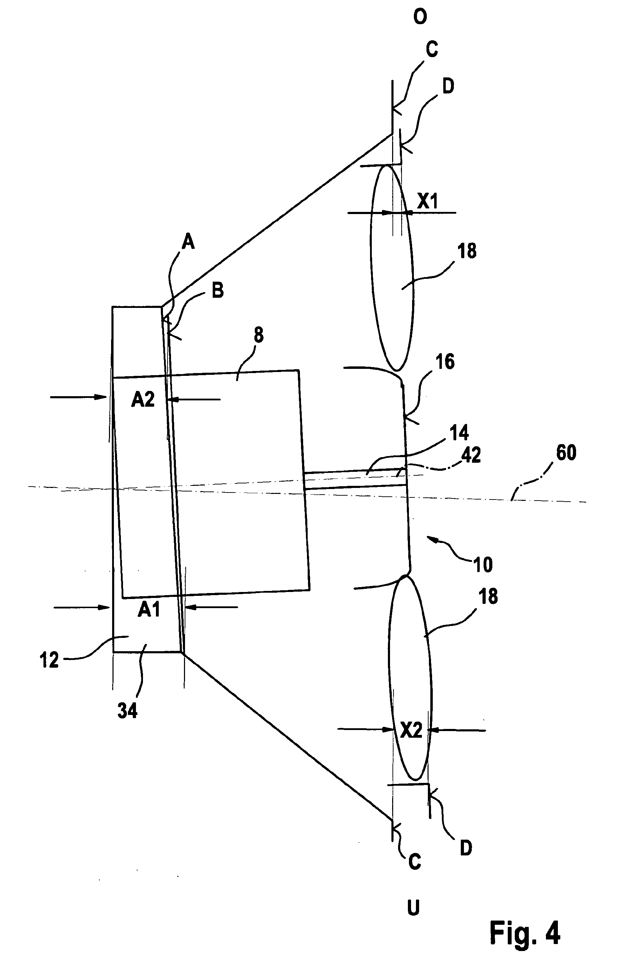

Im Gegensatz dazu wird bei den in den Figuren 4 bis 6 dargestellten erfindungsgemäßen Lüfteranordnungen 2 das Spaltmaß und insbesondere das axiale Spaltmaß X so eingestellt, dass im Neuzustand des Lüfters 4, d.h. unmittelbar nach dessen Montage hinter dem Kühler 6, ein Spaltmaß X2 an der Lüfterunterseite U größer ist als ein Spaltmaß X1 an der Lüfteroberseite O. Indem das Spaltmaß X2 an der Lüfterunterseite U ausreichend groß gemacht wird, kann wie bei den bekannten Lüftern 4 ein Kontakt zwischen dem Lüfterrad 10 und dem Lüftergehäuse 50 infolge einer Verformung bzw. eines Kriechens der Lüfterzarge 12 über die Betriebslebensdauer des Lüfters 4 sicher vermieden werden. Anders als bei den bekannten Lüfteranordnungen wird jedoch das mittlere Spaltmaß um den Umfang des Lüfterrades 10 herum kleiner, wodurch entweder der Luftleistungswirkungsgrad des Lüfters 4 erhöht oder alternativ bei der Herstellung der Lüfterzarge 12 eine Akzeptanz größerer Bauteiltoleranzen und/oder eine Verwendung preiswerterer Werkstoffe mit geringer Härte ermöglicht wird.

Um im Neuzustand des Lüfters 4 das Spaltmaß X2 an der Lüfterunterseite U im Vergleich zum Spaltmaß X1 an der Lüfteroberseite O zu vergrößern, wird bei der in Fig. 4 dargestellten Lüfteranordnung 2 die gemeinsame Drehachse 42 des Lüfterrades 10 und des Elektromotors 8 so ausgerichtet, dass sie in Bezug zu einer Längsmittelachse 60 der Lüfterzarge 12 in Richtung des Kühlers 6 unter einem kleinen Neigungswinkel nach oben geneigt ist. Der Neigungswinkel beträgt mehr als 0,5 Grad und wird im unbelasteten Neuzustand des Lüfters 4 zwischen der Drehachse 42 des Lüfterrades 10 einerseits und der Längsmittelachse 60 der Lüfterzarge 12 andererseits bzw. zwischen der Rotationsebene des Lüfterrades 10 und einer vom Rand der Luftaustrittsöffnung 54 des Lüftergehäuses 50 aufgespannten Ebene gemessen.

Um diesen Neigungswinkel einzustellen, werden die gegenüberliegenden Anlageflächen A und B des Elektromotors 8 bzw. des Motorrings 34 der Lüfterzarge 12 in Bezug zueinander nicht mehr parallel sondern geneigt ausgerichtet, vorteilhaft indem der Motorring 34 mit überstehenden Motoranschraubdomen (nicht dargestellt) versehen wird, die um den Umfang des Motorrings 34 eine unterschiedliche Höhe besitzen, wie in Fig. 4 durch die Maße A1 > A2 angedeutet. Dadurch wird auch die Rotationsebene D des Lüfterrades 10 verkippt, so dass sie in Bezug zur Ebene C des Lüftergehäuses 50 und zur Ebene E des Kühlers 6 geneigt ist.

Bei der in Fig. 5 nur zum Teil dargestellten Lüfteranordnung 2 werden zu demselben Zweck die über das Motorgehäuse 28 des Elektromotors 8 überstehenden Haltewinkel 32 um den Umfang des Gehäuses 28 herum in unterschiedlichen axialen Abständen L von einer zur Drehachse 42 senkrechten kühlerseitigen Stirnfläche 62 des Gehäuses 58 angeordnet, wie in Fig. 5 durch die Maße L1 und L2 angedeutet.

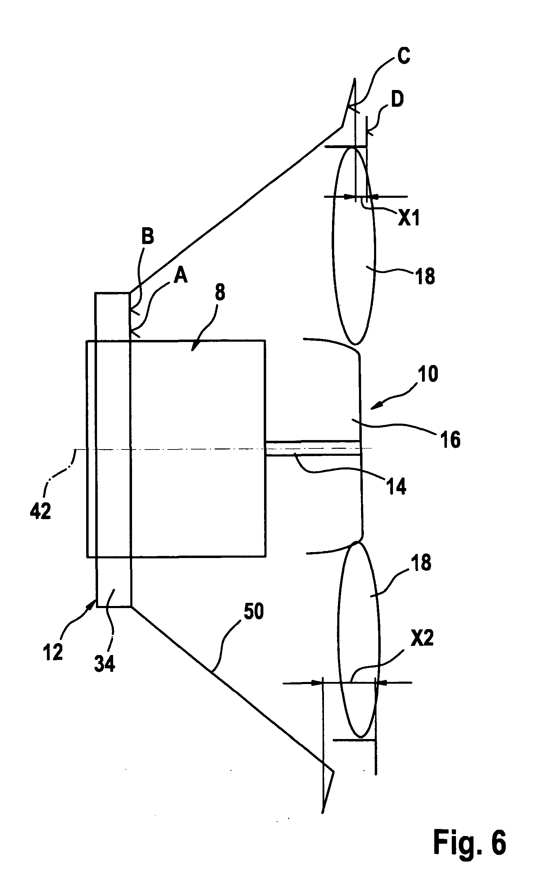

Bei der in Fig. 6 dargestellten Lüfteranordnung 2 ist das Lüftergehäuse 50 im Bereich des umlaufenden Spalts 56 nicht rotationssymmetrisch geformt, sondern so, dass es im Neuzustand an der Lüfterunterseite U einen größeren Abstand vom Mantel 20 bzw. bei mantellosen Lüftern 4 von der Einhüllenden des Lüfterrades 10 aufweist als an der Lüfteroberseite O.

Kombinationen der Maßnahmen aus den Figuren 4 bis 6 sind selbstverständlich ebenfalls möglich.

Die Figuren 6a bis 6f zeigen unterschiedliche Geometrien des Ringspalts 56 zwischen dem Lüftergehäuse 50 und dem Mantel 20 des Lüfterrades 10, wobei das jeweilige axiale Spaltmaß X und das jeweilige radiale Spaltmaß Y angegeben sind.

## Patentansprüche

1. Lüfter (4) mit einem Lüftergehäuse (50) und einem in Bezug zum Lüftergehäuse (50) um eine allgemein horizontale Drehachse (42) drehbaren Lüfterrad (10), dessen Einhüllende mit dem Lüftergehäuse (50) einen Ringspalt (56) begrenzt, wobei in einem Neuzustand des Lüfters (4) ein Spaltmaß (X, Y) des Ringspalts (56) an einer Seite (U) des Lüfters (4) größer als an einer in radialer Richtung der Drehachse (42) gegenüberliegenden Seite (O) ist, **dadurch gekennzeichnet, dass** eine von einem Rand einer Lufteintritts- und/oder Luftaustrittsöffnung des Lüftergehäuses (50) aufgespannte Gehäuseebene (C) und eine Rotationsebene (D) des Lüfterrades (10) in Bezug zueinander unter einem Neigungswinkel ungleich 0 Grad geneigt sind, so dass das Spaltmaß (X, Y) des Ringspalts (56) an der Unterseite (U) des Lüfters (4) größer als an der gegenüberliegenden Oberseite (O) ist.

2. Lüfter (4) nach Anspruch 1, **dadurch gekennzeichnet, dass** zumindest ein axiales Spaltmaß (X) des Ringspalts (56) an der einen Seite (U) des Lüfters (4) größer als an der gegenüberliegenden Seite (O) ist.

3. Lüfter (4) nach Anspruch 2, **dadurch gekennzeichnet, dass** das axiale Spaltmaß (X2) des Ringspalts (56) an der einen Seite (U) mindestens das 1,2 bis 1,5-fache des axialen Spaltmaßes (X1) des Ringspalts (56) an der gegenüberliegenden Seite (O) beträgt.

4. Lüfter (4) nach einem der vorangehenden Ansprüche, **dadurch gekennzeichnet, dass** eine ebene Anlagefläche für einen Antriebsmotor (8) des Lüfters (4) an einer das Lüftergehäuse (50) umfassenden Lüfterzarge (12) in Bezug zu einer radialen Gehäuseebene des Lüftergehäuses (50) unter einem Neigungswinkel ungleich 0 Grad geneigt ist.

5. Lüfter (4) nach einem der vorangehenden Ansprüche, **dadurch gekennzeichnet, dass** der Neigungswinkel größer als 0,5 Grad ist.

6. Lüfter (4) nach Anspruch 5 oder 6, **dadurch gekennzeichnet, dass** zum Anschrauben des Antriebsmotors (8) an der Lüfterzarge (12) dienende Motoranschraubdome unterschiedlich weit über einen Motorring (34) der Lüfterzarge (12) überstehen.

7. Lüfter (4) nach einem der Ansprüche 4 bis 6, **dadurch gekennzeichnet, dass** zum Anschrauben des Antriebsmotors (8) an der Lüfterzarge (12) dienende Haltewinkel (32) des Antriebsmotors (8) in Bezug zu einer Stirnfläche (62) des Antriebsmotors (8) axial versetzt sind.

8. Lüfter (4) nach einem der vorangehenden Ansprüche, **dadurch gekennzeichnet, dass** ein den Ringspalt (56) begrenzender Teil des Lüftergehäuses (50) eine nicht-rotationssymmetrische Form besitzt.

9. Lüfter (4) nach einem der vorangehenden Ansprüche, **dadurch gekennzeichnet, dass** ein radialer Abstand zwischen der Drehachse (42) des Lüfterrades (10) und dem Lüftergehäuse (50) an der Unterseite (U) des Lüfters (4) größer als an der Oberseite (O) des Lüfters (4) ist.

10. Verfahren zur Montage eines Lüfters mit einem Lüftergehäuse und einem in Bezug zum Lüftergehäuse um eine allgemein horizontale Drehachse drehbaren Lüfterrad, dessen Einhüllende mit dem Lüftergehäuse einen Ringspalt begrenzt, wobei bei der Montage des Lüfters (4) an einer Seite (U) des Lüfters (4) ein größeres Spaltmaß (X2) des Ringspalts (56) als an einer in radialer Richtung der Drehachse (42) gegenüberliegenden Seite (O) eingestellt wird, **dadurch gekennzeichnet, dass** eine von einem Rand einer Lufteintritts- und/oder Luftaustrittsöffnung des Lüftergehäuses (50) aufgespannte Gehäuseebene (C) und eine Rotationsebene (D) des Lüfterrades (10) in Bezug zueinander unter einem Neigungswinkel ungleich 0 Grad geneigt werden, so dass das Spaltmaß (X, Y) des Ringspalts (56) an der Unterseite (U) des Lüfters (4) größer als an der gegenüberliegenden Oberseite (O) ist.

## Claims

1. Fan (4) having a fan housing (50) and a fan wheel (10) which can be rotated in relation to the fan housing (50) about a generally horizontal axis of rotation (42) and of which the envelope bounds an annular gap (56) with the fan housing (50), wherein, in a new state of the fan (4), an extent (X, Y) of the annular gap (56) is greater on one side (U) of the fan (4) than on an opposite side (O), as seen in a radial direction of the axis of rotation (42), **characterized in that** a housing plane (C), which is defined by a periphery of an air-entry and/or air-exit opening of the fan housing (50), and a rotation plane (D) of the fan wheel (10) are inclined in relation to one another at an angle of inclination other than 0 degrees, and therefore the extent (X, Y) of the annular gap (56) is greater on the underside (U) of the fan (4) than on the upper side (0) located opposite.

2. Fan (4) according to Claim 1, **characterized in that** at least one axial extent (X) of the annular gap (56) is greater on the one side (U) of the fan (4) than on the opposite side (O).

3. Fan (4) according to Claim 2, **characterized in that** the axial extent (X2) of the annular gap (56) on the one side (U) is at least 1.2 to 1.5 times the axial extent (X1) of the annular gap (56) on the opposite side (O).

4. Fan (4) according to one of the preceding claims, **characterized in that** a planar abutment surface for a drive motor (8) of the fan (4) on a fan shroud (12), which comprises the fan housing (50), is inclined at an angle of inclination other than 0 degrees in relation to a radial plane of the fan housing (50).

5. Fan (4) according to one of the preceding claims, **characterized in that** the angle of inclination is greater than 0.5 degrees.

6. Fan (4) according to Claim 5 or 6, **characterized in that** screw-on domes, which serve for screwing the drive motor (8) on the fan shroud (12), project to different extents beyond a motor ring (34) of the fan shroud (12).

7. Fan (4) according to one of Claims 4 to 6, **characterized in that** retaining angles (32) of the drive motor (8), these serving for screwing the drive motor (8) on the fan shroud (12), are offset axially in relation to an end surface (62) of the drive motor (8).

8. Fan (4) according to one of the preceding claims, **characterized in that** a part of the fan housing (50) which bounds the annular gap (56) has a shape which is not rotationally symmetrical.

9. Fan (4) according to one of the preceding claims, **characterized in that** a radial spacing between the axis of rotation (42) of the fan wheel (10) and the fan housing (50) is greater on the underside (U) of the fan (4) than on the upper side (0) of the fan (4).

10. Method of mounting a fan having a fan housing and a fan wheel which can be rotated in relation to the fan housing about a generally horizontal axis of rotation and of which the envelope bounds an annular gap with the fan housing, wherein, during the operation of mounting the fan (4), a greater extent (X2) of the annular gap (56) is set on one side (U) of the fan (4) than on an opposite side (0), as seen in a radial direction of the axis of rotation (42), **characterized in that** a housing plane (C), which is defined by a periphery of an air-entry and/or air-exit opening of the fan housing (50), and a rotation plane (D) of the fan wheel (10) are inclined in relation to one another at an angle of inclination other than 0 degrees, and therefore the extent (X, Y) of the annular gap (56) is greater on the underside (U) of the fan (4) than on the upper side (0) located opposite.

## Revendications

1. Ventilateur (4) comprenant un boîtier de ventilateur (50) et une roue de ventilateur (10) pouvant tourner par rapport au boîtier de ventilateur (50) autour d'un axe de rotation généralement horizontal (42), dont l'extrémité d'enveloppement délimite avec le boîtier de ventilateur (50) une fente annulaire (56), dans lequel, dans un état neuf du ventilateur (4), une dimension de fente (X, Y) de la fente annulaire (56) au niveau d'un côté (U) du ventilateur (4) est supérieure à celle au niveau d'un côté (0) opposé dans la direction radiale de l'axe de rotation (42), **caractérisé en ce qu'**un plan de boîtier (C) tendu depuis un bord d'une ouverture d'entrée d'air et/ou de sortie d'air du boîtier de ventilateur (50) et un plan de rotation (D) de la roue de ventilateur (10) sont inclinés l'un par rapport à l'autre suivant un angle d'inclinaison différent de 0 degré, de sorte que la dimension de fente (X, Y) de la fente annulaire (56) au niveau du côté inférieur (U) du ventilateur (4) soit supérieure à la dimension au niveau du côté supérieur opposé (O).

2. Ventilateur (4) selon la revendication 1, **caractérisé en ce qu'**au moins une dimension de fente axiale (X) de la fente annulaire (56) au niveau de l'un des côtés (U) du ventilateur (4) est supérieure à une dimension au niveau du côté opposé (O).

3. Ventilateur (4) selon la revendication 2, **caractérisé en ce que** la dimension de fente axiale (X2) de la fente annulaire (56) au niveau de l'un des côtés (U) vaut au moins 1,2 fois à 1,5 fois la dimension de fente axiale (X1) de la fente annulaire (56) au niveau du côté opposé (O).

4. Ventilateur (4) selon l'une quelconque des revendications précédentes, **caractérisé en ce qu'**une surface d'appui plane pour un moteur d'entraînement (8) du ventilateur (4) contre un châssis de ventilateur (12) entourant le boîtier de ventilateur (50) est inclinée par rapport à un plan de boîtier radial du boîtier de ventilateur (50) suivant un angle d'inclinaison différent de 0 degré.

5. Ventilateur (4) selon l'une quelconque des revendications précédentes, **caractérisé en ce que** l'angle d'inclinaison est supérieur à 0,5 degré.

6. Ventilateur (4) selon la revendication 5 ou 6, **caractérisé en ce que** des dômes de vissage de moteur servant à visser le moteur d'entraînement (8) sur le châssis de ventilateur (12) dépassent sur une distance différente au-delà d'une bague de moteur (34) du châssis de ventilateur (12).

7. Ventilateur (4) selon l'une quelconque des revendications 4 à 6, **caractérisé en ce que** des coins de fixation (32) du moteur d'entraînement (8) servant à visser le moteur d'entraînement (8) sur le châssis de ventilateur (12) sont décalés axialement par rapport à une surface frontale (62) du moteur d'entraînement (8).

8. Ventilateur (4) selon l'une quelconque des revendications précédentes, **caractérisé en ce qu'**une partie du boîtier de ventilateur (50) limitant la fente annulaire (56) possède une forme sans symétrie de révolution.

9. Ventilateur (4) selon l'une quelconque des revendications précédentes, **caractérisé en ce qu'**une distance radiale entre l'axe de rotation (42) de la roue de ventilateur (10) et le boîtier de ventilateur (50) au niveau du côté inférieur (U) du ventilateur (4) est supérieure à cette distance au niveau du côté supérieur (0) du ventilateur (4).

10. Procédé de montage d'un ventilateur avec un boîtier de ventilateur et une roue de ventilateur pouvant tourner par rapport au boîtier de ventilateur autour d'un axe de rotation généralement horizontal, dont l'extrémité d'enveloppement délimite avec le boîtier de ventilateur une fente annulaire, dans lequel lors du montage du ventilateur (4) une dimension de fente (X2) de la fente annulaire (56) est ajustée de manière à être supérieure au niveau d'un côté (U) du ventilateur (4) à une dimension au niveau d'un côté opposé (0) dans la direction radiale de l'axe de rotation (42), **caractérisé en ce qu'**un plan de boîtier (C) tendu depuis un bord d'une ouverture d'entrée d'air et/ou de sortie d'air du boîtier de ventilateur (50) et un plan de rotation (D) de la roue de ventilateur (10) sont inclinés l'un par rapport à l'autre suivant un angle d'inclinaison différent de 0 degré, de sorte que la dimension de fente (X, Y) de la fente annulaire (56) au niveau du côté inférieur (U) du ventilateur (4) soit supérieure à la dimension au niveau du côté supérieur opposé (O).
